(19) Europäisches Patentamt
European Patent Office
Office européen des brevets

(11) EP 2 591 036 B1

(12) EUROPÄISCHE PATENTSCHRIFT

(45) Veröffentlichungstag und Bekanntmachung des Hinweises auf die Patenterteilung:
**26.03.2014 Patentblatt 2014/13**

(21) Anmeldenummer: **11743458.9**

(22) Anmeldetag: **04.07.2011**

(51) Int Cl.:
***C08G 18/44*** *(2006.01)* ***C08G 18/48*** *(2006.01)*
***C08G 18/50*** *(2006.01)* ***C08G 71/04*** *(2006.01)*
***C08G 64/34*** *(2006.01)* ***C08G 65/26*** *(2006.01)*
***C08G 18/46*** *(2006.01)* ***C08G 18/79*** *(2006.01)*
***C08G 64/42*** *(2006.01)* ***C08G 65/333*** *(2006.01)*
***C08L 69/00*** *(2006.01)* ***C08L 75/12*** *(2006.01)*
***C09D 175/04*** *(2006.01)*

(86) Internationale Anmeldenummer:
**PCT/EP2011/061174**

(87) Internationale Veröffentlichungsnummer:
**WO 2012/004209 (12.01.2012 Gazette 2012/02)**

(54) **VERFAHREN ZUR HERSTELLUNG VON POLYOLGEMISCHEN**

METHOD FOR PRODUCING POLYOL MIXTURES

PROCÉDÉ DE PRODUCTION DE MÉLANGES DE POLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2010 DE 102010030950**

(43) Veröffentlichungstag der Anmeldung:
**15.05.2013 Patentblatt 2013/20**

(73) Patentinhaber: **Bayer Intellectual Property GmbH
40789 Monheim (DE)**

(72) Erfinder:
- **WAMPRECHT, Christian
41472 Neuss (DE)**
- **GÜRTLER, Christoph
50676 Köln (DE)**

(74) Vertreter: **BIP Patents
c/o Bayer Intellectual Property GmbH
Creative Campus Monheim
Alfred-Nobel-Straße 10
40789 Monheim (DE)**

(56) Entgegenhaltungen:
**WO-A1-2008/013731 WO-A2-03/028644
US-B1- 6 713 599**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 591 036 B1

## Beschreibung

Die Erfindung betrifft ein Verfahren zur Herstellung von Polyolgemischen enthaltend Polyethercarbonatpolyol und urethangruppenhaltiges Polyol sowie ein Verfahren zur Herstellung von Polyurethan aus diesen Gemischen.

Die Herstellung von Polyethercarbonatpolyolen durch katalytische Anlagerung von Alkylenoxiden (Epoxiden) und Kohlendioxid an H-funktionelle Startersubstanzen (Starter) wurde seit mehr als 40 Jahren intensiv untersucht (Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkyaryl oder Aryl steht, die jeweils auch Heteroatome wie beispielsweise O, S, Si usw. enthalten können, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt entsteht das in Formel (I) gezeigte cyclische Carbonat (beispielsweise für R = $CH_3$ Propylencarbonat).

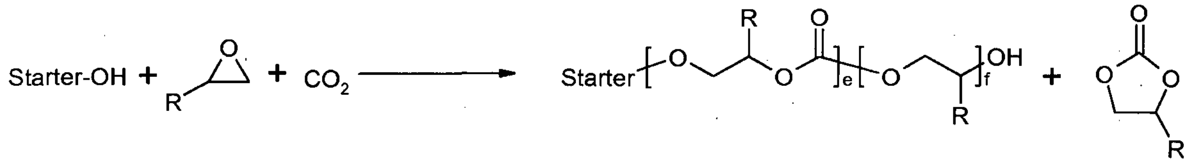

(I)

Bei dieser Herstellung von Polyethercarbonatpolyolen kommt es somit zur Bildung von unerwünschten cyclischen Carbonaten, wie z. B. Propylencarbonat (WO 2004/087788 A1, WO 2006/103212 A1). Diese cyclischen Carbonate werden üblicherweise destillativ entfernt, weil sie sich nachteilig bei den Folgereaktionen der erhaltenen Polyethercarbonatpolyole mit z. B. Polyisocyanaten auswirken, beispielsweise weil sie keine reaktiven Gruppen gegenüber Isocyanaten aufweisen. Die destillative Abtrennung der cyclischen Carbonate hat den Nachteil, dass dies einen erheblichen Verfahrensaufwand (Energie, Zeit, etc) bedeutet. Darüber hinaus geht die Abtrennung der cyclischen Carbonate damit einher, dass für die weitere Umsetzung mit Isocyanaten ein Teil der eingesetzten Rohstoffe verloren geht.

Es war somit eine Aufgabe der vorliegenden Erfindung ein Verfahren bereitzustellen, welches diese Nachteile nicht aufweist. Insbesondere sollten der Verlust dieser cyclischen Carbonate als Rohstoffe für die weitere Umsetzung mit Isocyanaten und der Destillationsschritt vermieden werden.

Gegenstand der Erfindung ist somit ein Verfahren zur Herstellung von Polyolgemischen, enthaltend Polyethercarbonatpolyol und urethangruppenhaltiges Polyol, dadurch gekennzeichnet, dass

(i) in einem ersten Schritt ein oder mehrere Alkylenoxide und Kohlendioxid in Gegenwart mindestens eines DMC-Katalysators an eine oder mehrere H-funktionellen Startsubstanzen angelagert werden ("Copolymerisation"), und
(ii) in einem zweiten Schritt zu dem in Schritt (i) entstandenen Rohgemisch mindestens eine aminofunktionelle Substanz zugesetzt wird.

In Schritt (ii) des erfindungsgemäßen Verfahren wird das bei der Copolymerisation von Alkylenoxid und $CO_2$ als Nebenprodukt entstehende cyclische Carbonat mit der aminofunktionellen Substanz umgesetzt, wobei aus dieser Umsetzung ein urethangruppenhaltiges Polyol B) resultiert, welches somit in einer Mischung mit dem Polyethercarbonatpolyol A) vorliegt. Damit wird nach dem erfindungsgemäßen Verfahren ohne Aufarbeitungsschritte (wie beispielsweise Destillation) ein Polyolgemisch enthaltend Polyethercarbonatpolyol A) und urethangruppenhaltiges Polyol B) erhalten.

Als aminofunktionelle Substanz werden beispielsweise technisch verfügbare Rohgemische an Aminen, Diamine und/oder Amino-Verbindungen, die zusätzlich auch Hydroxylgruppen enthalten können, eingesetzt.

Das erfindungsgemäße Verfahren hat den Vorteil, dass aus der aus der Copolymerisation resultierenden Mischung, enthaltend unerwünschtes cyclisches Carbonat, im zweiten Schritt (ii) wertvolle Polyolrohstoffe erhalten werden, so dass das resultierende Produkt ohne weitere Abtrennungsschritte (wie beispielsweise durch Destillation) in der weiteren Umsetzung zu veredelten Produkten, wie z. B. mit Isocyanaten zu Polyurethanen, genutzt werden kann. Die nach dem erfindungsgemäßen Verfahren erhaltenen Produkte (Polyolgemische) stellen somit wertvolle Rohstoffe dar für die Herstellung von Polyurethanen (wie beispielsweise Polyurethanschäumen, Polyurethankunststoffe, thermoplastische Polyurethane, Polyurethandispersionen, Polyurethanlacke, Polyurethanklebstoffe und Polyurethandichtstoffe).

Eine bevorzugte Ausführungsform der Erfindung ist ein Verfahren zur Herstellung von Polyurethanen, dadurch gekennzeichnet, dass

(i) in einem ersten Schritt ein oder mehrere Alkylenoxide und Kohlendioxid in Gegenwart mindestens eines DMC-Katalysators an eine oder mehrere H-funktionellen Startsubstanzen angelagert werden ("Copolymerisation"),
(ii) in einem zweiten Schritt zu dem in Schritt (i) entstandenen Rohgemisch mindestens eine aminofunktionelle Substanz zugesetzt wird, und
(iii) das aus Schritt (ii) resultierende Polyolgemisch mit Di- und/oder Polyisocyanat zur Reaktion gebracht wird.

Das erfindungsgemäße Verfahren stellt eine einfache und elegante Methode dar, cyclisches Carbonat aus Copolymerisationsprodukten von Alkylenoxiden und Kohlendioxid ohne Destillations- oder sonstigen Aufarbeitungsschritt zu entfernen, wobei dieses cyclische Carbonat in ein Folgeprodukt überführt wird, das geeignet ist, mit Isocyanat zu Polyurethan verarbeitet zu werden. Dies geschieht durch Umsetzung des in der Mischung neben Polycarbonatpolyolen vorliegenden cyclischen Carbonats mit einer oder mehreren aminofunktionellen Substanzen (wie beispielsweise primäre und/oder sekundäre Amine).

Aminofunktionelle Substanzen im Sinne der Erfindung sind beispielsweise aliphatische, cycloaliphatische und/oder heterocyclische primäre Amine, wie zum Beispiel solche gemäß der Formeln (II), (III), (IV) und (V),

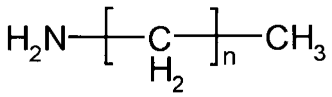

(II)

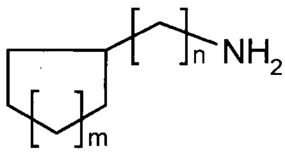

(III)

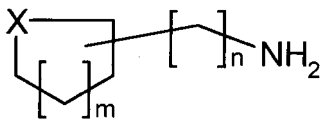

(IV)

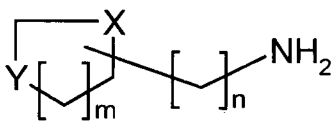

(V)

wobei

n eine ganze Zahl von 0 bis 17,
m eine ganze Zahl von 0 bis 8, vorzugsweise 1 oder 2 bedeuten und
X und Y unabhängig voneinander für NH, O oder S stehen.

Als aminofunktionelle Substanzen werden bevorzugt primäre Monoamine (wie beispielsweise Methylamin, Ethylamin, 1-Propylamin, 1-Ethylpropylamin, 1-Butylamin, 1-Hexylamin, 2-Ethylhexylamin, Cyclopentylamin, Cyclohexylamin, 2-Methylcylohexylamin, 4-Methylcyclohexylamin, Cyclooctylamin, 1-Octylamin, 1-Decylamin, 1-Dodecylamin, 1-Octadecylamin; N-(3-Aminopropyl)-2-pyrrolidinon, 1-Aminopyrrolidin, 1-Aminopiperidin, 1-Amino-4-methylpiperazin, 4-(2-Aminoethyl)-morpholin, 1-(2-Aminoethyl)-piperidin, 1-(2-Aminoethyl)-pyrrolidin, 2-(2-Aminoethyl)-thiophen, 4-(2-Aminoethyl)-pyridin und Polyetheramine (wie z. B. die Jeffamin® M-Serie, beispielsweise Jeffamin® M-600 oder Jeffamin® M-1000 von Huntsman) und/oder sekundäre Monoamine (wie z. B. N-Ethylmethylamin, N-Cyclohexylmethylamin; Ethylenimin, Pyrrolidin, 4,5-Dihydropyrazol, Oxazolan, Piperidin) und/oder Diamine mit primären und/oder sekundären Aminogruppen (wie z. B 1,2-Diaminoethan, 1,3-Diaminopropan, 1,4-Diaminobutan, 1,2-Bis-(methylamino)-ethan, 1,3-Diaminopentan, 1,6-Diaminohexan, 1,8-Diaminooctan, 1,9-Diaminononan, 1,10-Diaminodecan, 1,12-Diaminododecan, 1,2-Diaminocyclohexan, 4,4'-Diaminodicyclohexylmethan, Isophorondiamin, Piperazin, 3-Aminopyrrolidin, 2-(Aminomethyl)-piperidin, 4-(Aminomethyl)-piperidin, 3-Aminopiperidin, 4-Aminopiperidin, 2-Aminomethylpiperidin, 4-Aminomethylpiperidin, 2-Aminomethylpyrrolidin, Piperazin; Polyetherdiamine, wie z. B. die Jeffamin® D-Serie, beispielsweise Jeffamine® D-230, Jeffamin® D-400, Jeffamin® D-2000, Jeffamin® D-4000; aliphatische und cycloaliphatische Triamine mit primären und/oder sekundären Aminogruppen, wie z. B. Triaminononan (4-Aminomethyl-1,8-octandiamin); Polyetheramine, wie z. B. Jeffamin® T-Serie, beispielsweise Jeffamin® T -403, Jeffamin® T-3000, Jeffamin® T-5000) und/oder hydroxyfunktionelle Amine mit primären oder sekundären Aminogruppen (wie z. B. 2-Amino-ethanol, 2-Amino-1-propanol, 1-Amino-2-propanol, 2-Amino-1-butanol, 4-Amino-1-butanol, 4-(2-Hydoxyethyl)-piperidin, 4-(2-Hydroxyethyl)-piperazin, 2-Amino-cyclohexanol, 4-Amino-cyclohexanol, 2-Amino-cyclopentanol, Diethanolamin, Bis-(2-hydroxypropyl)-amin) eingesetzt.

Besonders bevorzugt werden als aminofunktionelle Substanzen hydroxyfunktionelle Monoamine mit primärer oder sekundärer Aminogruppe (wie beispielsweise 2-Aminoethanol, 2-Amino-1-propanol, 1-Amino-2-propanol, 2-Amino-1-butanol, 4-Amino-1-butanol, 4-(2-Hydoxyethyl)-piperidin, 4-(2-Hydroxyethyl)-piperazin, 2-Amino-cyclohexanol, 4-Amino-cyclohexanol, 2-Amino-cyclopentanol, Diethanolamin, Bis-(2-hydroxypropyl)-amin) und/oder Diamine mit primären und/oder sekundären Aminogruppen (wie beispielsweise 1,2-Diaminoethan, 1,3-Diaminopropan, 1,4-Diaminobutan, 1,2-Bis-(methylamino)-ethan, 1,3-Diaminopentan, 1,6-Diaminohexan, 1,8-Diaminooctan, 1,9-Diaminononan, 1,10-Diaminodecan, 1,12-Diaminododecan, 1,2-Diaminocyclohexan, 4,4'-Diaminodicyclohexylmethan, Isophorondiamin, Piperazin, 3-Aminopyrrolidin, 2-(Aminomethyl)-piperidin, 4-(Aminomethyl)-piperidin, 3-Aminopiperidin, 4-Aminopiperidin, 2-Aminomethylpiperidin, 4-Aminomethylpiperidin, 2-Aminomethylpyrrolidin, Piperazin; Polyetherdiamine) eingesetzt. Dabei kann es sich sowohl um Substanzen mit primären Aminogruppen als auch um solche mit sekundären Aminogruppen handeln. Kommen Substanzen mit sekundären Aminogruppen zum Einsatz, so resultieren hydroxyfunktionelle, urethangruppenhaltige Polyole B) mit substituierten Urethangruppen, was sich überraschend vorteilhaft auf eine niedrige Viskosität der resultierenden Polyolgemische auswirkt. Ganz besonders bevorzugte aminofunktionelle Verbindungen sind somit hydroxyfunktionelle Monoamine mit sekundärer Aminogruppe (wie beispielsweise Diethanolamin).

In einer bevorzugten Ausführungsform des Verfahrens der vorliegenden Erfindung wird der Schritt (ii) in weniger als 12 h, vorzugsweise in weniger als 1 h im Anschluss an Schritt (i) ausgeführt.

Das Verfahren gemäß Schritt (i) zur Herstellung von Polyethercarbonatpolyolen durch Anlagerung von ein oder mehreren Alkylenoxiden und Kohlendioxid in Gegenwart mindestens eines DMC-Katalysators an eine oder mehrere H-funktionelle Startsubstanzen ("Copolymerisation") ist aus dem Stand der Technik bekannt (z.B. WO-A 2004/087788, WO-A 2006/103212, WO-A 2008/013731, US 4,826,953, WO-A 2008/092767). Bei dieser Copolymerisation können (beispielsweise in Abhängigkeit vom jeweils gewählten Katalysator) im Allgemeinen bis zu 30 Gew.-% an cyclischem Carbonat gebildet werden.

Die Herstellung von Polyethercarbonatpolyol gemäß Schritt (i) erfolgt beispielsweise durch ein Verfahren zur Herstellung von Polyethercarbonatpolyolen aus einer oder mehrerer H-funktionellen Startsubstanzen, eines oder mehrerer Alkylenoxiden und Kohlendioxid in Gegenwart eines DMC-Katalysators, dadurch gekennzeichnet, dass

($\alpha$) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt werden,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere Alkylenoxide und Kohlendioxid zu der aus Schritt ($\beta$) resultierenden Mischung zugesetzt werden, wobei die in Schritt ($\gamma$) eingesetzten Alkylenoxide gleich oder verschieden sein können von den bei Schritt ($\beta$) eingesetzten Alkylenoxiden.

Als Aktivierung im Sinne der Erfindung wird ein Schritt bezeichnet, bei dem eine Teilmenge Alkylenoxidverbindung, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Hotspot. Im Allgemeinen kann dem Aktivierungsschritt ein Schritt zum Trocknen des DMC-Katalysators und ggf. des Starters durch erhöhte Temperatur und/oder reduziertem Druck vorgelagert sein, wobei dieser

Schritt der Trocknung nicht Teil des Aktivierungsschrittes im Sinne der vorliegenden Erfindung ist.

Allgemein können für das erfindungsgemäße Verfahren Alkylenoxide mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus Wasser, ein- oder mehrwertige Alkohole, ein- oder mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyethercarbonatpolyole, Polycarbonatpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono-oder Diglycerid von Ricinolsäure, Monoglyceride von Fettsäuren, chemisch modifizierte Mono-, Di-und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF SE), Merginof-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (VI),

$$HO-(CH_2)_x-OH \qquad (VI)$$

wobei x eine Zahl von 1 bis 20, bevorzugt eine gerade Zahl von 2 bis 20 ist. Beispiele für Alkohole gemäß Formel (VI) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (VI) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8 Octandiol, Diethylenglykol, Dipropylenglykol, Glycerin, Trimethylolpropan, di- und trifunktionelle Polyetherpolyole, wobei das Polyetherpolyol aus einer di-oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr

geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden beispielsweise erhalten, indem man

(i) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuß (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze. Beispielsweise wird eine wässrige Lösung von Zinkchlorid (bevorzugt im Überschuß bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuß, bezogen auf Zinkhexacyanocobaltat) zur gebildeten Suspension gegeben.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die Umsetzung des aus Schritt (i) resultierenden Rohgemisches mit mindestens einer aminofunktionellen Substanz erfolgt beispielsweise nach Ermittlung des Gehaltes an cyclischem Carbonat im Rohgemisch. Vorzugsweise wird der Gehalt an cyclischem Carbonat in der aus Schritt (i) erhaltenen Mischung bestimmt, und in Schritt (ii) die aminofunktionelle Substanz in einem Molverhältnis von aminofunktioneller Substanz zu cyclischem Carbonat von 1,5 : 1,0 bis 0,5 : 1,0, besonders bevorzugt 1,1 : 1,0 bis 0,9 : 1,0 eingesetzt.

Bei der Umsetzung gemäß Schritt (ii) erfolgt eine Reaktion des cyclischen Carbonats mit der aminofunktionellen Substanz. Die Umsetzung gemäß Schritt (ii) erfolgt beispielsweise bei Temperaturen zwischen 0 und 150 °C, vorzugsweise 10 bis 140 °C, besonders bevorzugt 20 bis 130 °C und ganz besonders bevorzugt 30 bis 120 °C. Der Reaktionsverlauf kann mittels IR-Spektroskopie und Titration der Aminzahl leicht verfolgt werden. Dabei verschwindet im Laufe der Reaktion die Intensität der Carbonylbande des cyclischen Carbonats um 1800 $cm^{-1}$, und die Aminzahl der Reaktionsmischung sinkt mit fortschreitender Umsetzung der eingesetzten aminofunktionellen Substanz mit dem cyclischen Carbonat. Im Laufe der Reaktion bleibt die Carbonylbande des Polyethercarbonatpolyols (1740 - 1750 $cm^{-1}$) nahezu unverändert.

Durch die Auswahl der eingesetzten aminofunktionellen Substanz bzw. der Verwendung von Mischungen von zwei oder mehreren aminofunktionellen Substanzen kann in der Reaktion des cyclischen Carbonats mit diesen aminofunktionellen Substanzen die Anzahl an gegenüber Isocyanatgruppen reaktiven Gruppen pro Molekül des entstehenden urethangruppenhaltigen Polyols B) gesteuert werden. Beispielsweise resultieren aus der Umsetzung von cyclischem Carbonat mit

a) aminokuktioneller Substanz = primäres Amin mit einer Hydroxyl-Gruppe pro Molekül (wie beispielsweise 2-Aminoethanol): urethangruppenhaltige Polyole B) mit 2 Hydroxylgruppen pro Molekül,
b) aminofunktioneller Substanz = sekundäres Amin mit zwei Hydroxyl-Gruppen pro Molekül (wie beispielsweise Diethanolamin): urethangruppenhaltige Polyole B) mit 3 Hydroxylgruppen pro Molekül.

Besonders bevorzugt besitzen die urethangruppenhaltige Polyole B) der erfindungsgemäßen Polyolgemische 2 bis 3 Hydroxylgruppen pro Molekül und OH-Zahlen von 90 bis 815 mg KOH/g. Besonders bevorzugt besitzen die urethangruppenhaltige Polyole B) 2 bis 3 Hydroxylgruppen pro Molekül und OH-Zahlen von 340 bis 815 mg KOH/g. Ganz besonders bevorzugt besitzen die urethangruppenhaltige Polyole B) 2 bis 3 Hydroxylgruppen pro Molekül und OH-Zahlen von 680 bis 815 mg KOH/g.

Die Polyetherpolycarbonatpolyole A) der erfindungsgemäßen Polyolgemische haben zahlengemittelte Molekulargewichte von 500 bis 10000 Da, vorzugsweise 500 bis 8000 Da, besonders bevorzugt 500 bis 6000 Da und ganz besonders bevorzugt 500 bis 4000 Da. Die Anzahl der Hydroxylgruppen pro Molekül (Funktionalität) des Polyethercarbonatpolyols A) liegt im allgemeinen bei 1 bis 8, vorzugsweise bei 2 bis 6, besonders bevorzugt bei 2 bis 4 und ganz besonders bevorzugt bei 2 bis 3.

Die erfindungsgemäßen, aus Schritt (ii) resultierenden Polyolgemische werden im allgemeinen als homogene, klare bis leicht trübe Mischungen, enthaltend Polyetherpolycarbonatpolyole A), und urethangruppenhaltige Polyole B), erhalten. Diese erfindungsgemäßen Mischungen stellen wertvolle Rohstoffe zur Herstellung von Polyurethanen (wie beispielsweise Polyurethanschäume, Polyurethankunststoffe, thermoplastische Polyurethane, Polyurethandispersionen, Polyurethanlacke, Polyurethanklebstoffe und Polyurethandichtstoffe) dar.

Die Umsetzung gemäß Schritt (iii) des aus Schritt (ii) resultierenden Polyolgemisches mit Diund/oder Polyisocyanat erfolgt nach an sich bekannten Verfahren. Dabei kann das aus Schritt (ii) resultierende Polyolgemisch sowohl in Gegenwart organischer Lösemittel, als wässrige Zubereitung oder lösemittelfrei zum Einsatz kommen.

Als Di- und/oder Polyisocyanat können organische und/oder modifizierte Di- und/oder Polyisocyanate eingesetzt werden. Diese sind dem Fachmann im Prinzip bekannt und beispielsweise in "Kunststoffhandbuch", Band 7 "Polyurethane", Kapitel 5.1 beschrieben z.B. aliphatische, cycloaliphatische, araliphatische, aromatische und heterocyclische Polyisocyanate, der Formel $Q(NCO)_n$ in der n = 2 - 4, vorzugsweise 2, und Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 5 - 10 C-Atomen, einen aromatischen Kohlenwasserstoffrest mit 6 - 15, vorzugsweise 6 - 13 C-Atomen, oder einen araliphatischen Kohlenwasserstoffrest mit 8 - 15, vorzugsweise 8 - 13 C-Atomen, bedeuten, z.B. solche Isocyanate wie sie in der DE-OS 2 832 253, Seiten 10 -11, beschrieben werden.

Die erfindungsgemäßen Polyolgemischen können zur Umsetzung mit Di- und/oder Polyisocyanat auch mit Polyetherpolyolen, Polyetheresterpolyole und/oder Polyesterpolyolen abgemischt werden. Geeignete Polyetherpolyole, Polyetheresterpolyole und/oder Polyesterpolyole weisen einen OH-Zahlenbereich von üblicherweise 9 bis 200, vorzugsweise 14 bis 180 und besonders bevorzugt 28 bis 150 mg KOH/g, und eine Funktionalität von 1 bis 6, vorzugsweise 2 bis 4 und besonders bevorzugt 2 bis 3 auf.

Die Umsetzung gemäß Schritt (iii) des aus Schritt (ii) resultierenden Polyolgemisches mit Di-und/oder Polyisocyanat kann auch in Gegenwart von Lösungsmitten, Treibmitteln, Flammschutzmitteln, Katalysatoren, Stabilisatoren, und/oder sonstigen Hilfs- und Zusatzstoffen durchgeführt werden, wie dies dem Fachmann im Prinzip bekannt und beispielsweise in "Kunststoffhandbuch", Band 7 "Polyurethane", Kapitel 3.4 beschrieben ist.

## Beispiele

Die OH-Zahl wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Das Verhältnis von cyclischem Carbonat (Propylencarbonat) zu Polyethercarbonatpolyol wurde mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (VII) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (VII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(VII)}$$

Der Gewichtsanteil (in Gew.-%) polymer-gebundenen Carbonats (LC') in der Reaktionsmischung wurde nach Formel (VIII) berechnet,

$$LC' = \frac{[F(5{,}1-4{,}8) - F(4{,}5)] * 102}{N} * 100\% \qquad \text{(VIII)}$$

wobei sich der Wert für N ("Nenner" N) nach Formel (IX) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(IX)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (X) berechnet,

$$CC' = \frac{F(4{,}5) * 102}{N} * 100\% \qquad \text{(X)}$$

wobei sich der Wert für N nach Formel (IX) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritte aufgebaut wurde, und Polyethercarbonatpolyol, aufgebaut aus Starter, Propylenoxid und Kohlendioxid während der in Gegenwart von $CO_2$ stattfmdenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol) sowie aus der Reaktion des Starters mit Epoxid resultiert, das unter $CO_2$-freien Bedingungen zugegeben wurde, wurde hierbei nicht berücksichtigt).

Die Durchführung des Schrittes (i), d.h. die Herstellung des Rohgemisches enthaltend Polyethercarbonatpolyol und cyclisches Carbonat (Propylencarbonat) erfolgte nach dem Verfahren gemäß WO-A 2008/013731, wobei als Startpolyol 1,8-Octandiol und als Alkylenoxid Propylenoxid eingesetzt wurde, und der eingesetzte DMC-Katalysator hergestellt wurde gemäß Beispiel 6 von WO-A 01/80994. Es wurden auf diese Weise zwei Rohgemische mit folgenden Kenndaten synthetisiert:

Rohgemisch 1:

OH-Zahl: 59,3 mg KOH/g
eingebautes $CO_2$: 18,4 Gew.-%
Anteil Polyethercarbonatpolyol: 93,7 Gew.-%
Anteil Propylencarbonat: 6,3 Gew.-%
Viskosität: 3000 mPas (23 °C)

Rohgemische 2:

OH-Zahl: 65,2 mg KOH/g
eingebautes $CO_2$: 19,9 Gew.-%
Anteil Polyethercarbonatpolyol: 89,2 Gew.-%
Anteil Propylencarbonat: 10,8 Gew.-%
Viskosität: 1250 mPas (23 °C)

Beispiel 1 (erfindungsgemäß)

100 g Rohgemisch 1 wurden in einem 250 ml Vierhalskolben mit Rührer, Tropftrichter, Rückflusskühler und Stickstoffeinleitung vorgelegt und auf 50 °C aufgeheizt: Dann wurden 3,75 g 2-Aminoethanol innerhalb von 10 Minuten bei 50 °C zugetropft. Es wurde so lange bei 50 °C gerührt, bis keine Aminzahl mehr titrierbar war bzw. bis die Aminzahl konstant war. Darüber hinaus wurde der Reaktionsverlauf mittels IR-Spektrum verfolgt. Es war zu beobachten, dass die Bande des cyclischen Carbonats bei 1806 cm-1 im Verlauf der Reaktion verschwand. Die Bande der linearen Carbonatgruppen bei 1745 cm-1 blieb bestehen. Die beiden neuen Banden der entstandenen Urethangruppe waren bei 1690 cm-1 (Schulter) und 1538 cm-1 zu erkennen. Es entstand eine Polyolmischung mit einer Viskosität von 6340 mPa·s (23 °C) und einer OH-Zahl von 130 mg KOH/g.

Beispiel 2 (erfindungsgemäß)

100 g Rohgemisch 2 wurden in einem 250 ml Vierhalskolben mit Rührer, Tropftrichter, Rückflusskühler und Stickstoffeinleitung vorgelegt und auf 50 °C aufgeheizt. Dann wurden 6,45 g 2-Aminoethanol innerhalb von 10 Minuten bei 50 °C zugetropft. Es wurde so lange bei 50 °C gerührt, bis keine Aminzahl mehr titrierbar war bzw. bis die Aminzahl konstant war. Darüber hinaus wurde der Reaktionsverlauf mittels IR-Spektrum verfolgt. Es war zu beobachten, dass die Bande des cyclischen Carbonats bei 1799 cm-1 im Verlauf der Reaktion verschwand. Die Bande der linearen Carbonatgruppen bei1747 cm-1 blieb bestehen. Die beiden neuen Banden der entstandenen Urethangruppe waren bei 1691 cm-1 (Schulter) und 1538 cm-1 zu erkennen. Es entstand eine Polyolmischung mit einer Viskosität von 3330 mPa·s (23 °C) und einer OH-Zahl von 156 mg KOH/g.

Beispiel 3 (erfindungsgemäß)

100 g Rohgemisch 1 wurden in einem 250 ml Vierhalskolben mit Rührer, Tropftrichter, Rückflusskühler und Stickstoffeinleitung vorgelegt und auf 80 °C aufgeheizt. Dann wurden 6,45 g Diethanolamin innerhalb von 10 Minuten bei 80 °C zugetropft. Es wurde so lange bei 80 °C gerührt, bis keine Aminzahl mehr titrierbar war bzw. bis die Aminzahl konstant war. Darüber hinaus wurde der Reaktionsverlauf mittels IR-Spektrum verfolgt. Es war zu beobachten, dass die Bande des cyclischen Carbonats bei 1799 cm-1 im Verlauf der Reaktion verschwand. Die Bande der linearen Carbonatgruppen bei 1745 cm-1 blieb bestehen. Die beiden neuen Banden der entstandenen Urethangruppe waren bei 1695 cm-1 (Schulter) und 1541 cm-1 zu erkennen. Es entstand eine Polyolmischung mit einer Viskosität von 5180 mPa·s (23 °C) und einer OH-Zahl von 154 mg KOH/g.

Die Beispiele 1 bis 3 belegen anhand der analytischen Daten, dass das cyclische Carbonat mit Hilfe von aminofunktionellen Substanzen zu urethangruppenhaltigem Polyol umgesetzt wird, während die Carbonatgruppe des Polyethercarbonatpolyols nicht mit der aminofunktionellen Substanz reagiert.

Beispiel 4 (erfindungsgemäß)

50,0 g Polyolmischung aus Beispiel 2 wurden mit 29,8 g Desmodur® N 3390 BA (Aliphatisches Polyisocyanat der Bayer MaterialScience AG, 90%ig in Butylacetat mit einem NCO-Gehalt von 19,6 Gew.-%) durch Rühren vermischt. Diese Mischung wurde mit Hilfe eines handelsüblichen Filmziehers als Nassfilm mit einer Filmdicke von 50 μm auf eine Glasplatte aufgezogen. Nach Ablüften des Lösungsmittels (Butylacetat) bei Raumtemperatur wurde die Glasplatte 30 min bei 80 °C und anschließend 24 h bei Raumtemperatur gelagert. Man erhielt einen Klarlackfilm, der gegen Xylol (92 Doppelhübe mit einem getränkten Wattebausch bis zur sichtbaren Beschädigung) und Superbenzin (97 Doppelhübe mit einem getränkten Wattebausch bis zur sichtbaren Beschädigung) eine gute Beständigkeit aufwies.

Beispiel 4 belegt, dass die nach dem erfindungsgemäßen Verfahren erhältlichen Polyolgemische ohne weitere Aufarbeitung mit Isocyanat zu Polyurethanen, in diesem Fall zu einem Polyurethanlackfilm, verarbeitet werden können.

## Patentansprüche

**1.** Verfahren zur Herstellung von Polyolgemischen enthaltend Polyethercarbonatpolyol und urethangruppenhaltiges Polyol, **dadurch gekennzeichnet, dass**

(i) in einem ersten Schritt ein oder mehrere Alkylenoxide und Kohlendioxid in Gegenwart mindestens eines DMC-Katalysators an eine oder mehrere H-funktionellen Startsubstanzen angelagert werden ("Copolymerisation"), und
(ii) in einem zweiten Schritt zu dem in Schritt (i) entstandenen Rohgemisch mindestens eine aminofunktionelle Substanz zugesetzt wird.

**2.** Verfahren gemäß Anspruch 1, wobei

(iii) das aus Schritt (ii) resultierende Polyolgemisch mit Di- und/oder Polyisocyanat zur Reaktion gebracht wird.

**3.** Verfahren gemäß Anspruch 1 oder 2, wobei als aminofunktionelle Substanzen aliphatische, cycloaliphatische und/oder heterocyclische primäre Amine eingesetzt werden.

**4.** Verfahren gemäß Anspruch 1 oder 2, wobei als aminofunktionelle Substanzen primäre Monoamine, sekundäre Monoamine, Diamine mit primären und/oder sekundären Aminogruppen und/oder hydroxyfunktionelle Amine mit primären oder sekundären Aminogruppen eingesetzt werden.

**5.** Verfahren gemäß Anspruch 1 oder 2, wobei als aminofunktionelle Substanzen 2-Amino-ethanol, 2-Amino-1-propanol, 1-Amino-2-propanol, 2-Amino-1-butanol, 4-Amino-1-butanol, 4-(2-Hydoxyethyl)-piperidin, 4-(2-Hydroxyethyl)-piperazin, 2-Amino-cyclohexanol, 4-Amino-cyclohexanol, 2-Amino-cyclopentanol, Diethanolamin, Bis-(2-hydroxypropyl)-amin) und/oder Diamine mit primären und/oder sekundären Aminogruppen (wie beispielsweise 1,2-Diaminoethan, 1,3-Diaminopropan, 1,4-Diaminobutan, 1,2-Bis-(methylamino)-ethan, 1,3-Diaminopentan, 1,6-Diaminohexan, 1,8-Diaminooctan, 1,9-Diaminononan, 1,10-Diaminodecan, 1,12-Diaminododecan, 1,2-Diaminocyclohexan, 4,4'-Diaminodicyclohexylmethan, Isophorondiamin, Piperazin, 3-Aminopyrrolidin, 2-(Aminomethyl)-piperidin, 4-(Aminomethyl)-piperidin, 3-Aminopiperidin, 4-Aminopiperidin, 2-Aminomethylpiperidin, 4-Aminomethylpiperidin, 2-Aminomethylpyrrolidin, Piperazin; Polyetherdiamine eingesetzt werden.

**6.** Verfahren gemäß Anspruch 1 oder 2, wobei Schritt (ii) in weniger als 12 h im Anschluss an Schritt (i) ausgeführt wird.

**7.** Verfahren gemäß Anspruch 1 oder 2, wobei der Gehalt an cyclischem Carbonat in der aus Schritt (i) erhaltenen Mischung bestimmt wird, und in Schritt (ii) die aminofunktionelle Substanz in einem Molverhältnis von aminofunktioneller Substanz zu cyclischem Carbonat von 1,5 : 1,0 bis 0,5 : 1,0 eingesetzt wird.

**8.** Verfahren gemäß Anspruch 1 oder 2, wobei die Umsetzung gemäß Schritt (ii) bei Temperaturen zwischen 0 und 150 °C erfolgt.

**9.** Polyolgemische erhältlich nach einem Verfahren gemäß Anspruch 1.

**10.** Polyurethan erhältlich nach einem Verfahren gemäß Anspruch 2.

**11.** Verwendung der Polyolgemische gemäß Anspruch 1 als Rohstoff zur Herstellung von Polyurethan.

**12.** Verwendung der Polyolgemische gemäß Anspruch 1 als Rohstoff zur Herstellung von isocyanatfunktionellen Prepolymeren, als Rohstoff zur Herstellung von wässrigen Polyurethandispersionen oder als Rohstoff zur Herstellung von Lacken, Klebstoffen, Dichtstoffen und Kunststoffen.

**Claims**

**1.** Process for the preparation of polyol mixtures comprising polyether carbonate polyol and polyol containing urethane groups, **characterized in that**

(i) in a first step one or more alkylene oxides and carbon dioxide are added on to one or more H-functional starter substances in the presence of at least one DMC catalyst ("copolymerization"), and
(ii) in a second step at least one amino-functional substance is added to the crude mixture formed in step (i).

**2.** Process according to Claim 1, wherein

(iii) the polyol mixture resulting from step (ii) is reacted with di- and/or polyisocyanate.

**3.** Process according to Claim 1 or 2, wherein aliphatic, cycloaliphatic and/or heterocyclic primary amines are employed as amino-functional substances.

**4.** Process according to Claim 1 or 2, wherein primary monoamines, secondary monoamines, diamines with primary and/or secondary amino groups and/or hydroxy-functional amines with primary or secondary amino groups are employed as amino-functional substances.

**5.** Process according to Claim 1 or 2, wherein 2-aminoethanol, 2-amino-1-propanol, 1-amino-2-propanol, 2-amino-1-butanol, 4-amino-1-butanol, 4-(2-hydroxyethyl)-piperidine, 4-(2-hydroxyethyl)-piperazine, 2-aminocyclohexanol, 4-aminocyclohexanol, 2-aminocyclopentanol, diethanolamine, bis-(2-hydroxypropyl)-amine and/or diamines with primary and/or secondary amino groups (such as, for example, 1,2-diaminoethane, 1,3-diaminopropane, 1,4-diaminobutane, 1,2-bis-(methylamino)-ethane, 1,3-diaminopentane, 1,6-diaminohexane, 1,8-diaminooctane, 1,9-diaminononane, 1,10-diaminodecane, 1,12-diaminododecane, 1,2-diaminocyclohexane, 4,4'-diaminodicyclohexylmethane, isophoronediamine, piperazine, 3-aminopyrrolidine, 2-(aminomethyl)-piperidine, 4-(aminomethyl)-piperidine, 3-aminopiperidine, 4-aminopiperidine, 2-aminomethylpiperidine, 4-aminomethylpiperidine, 2-aminomethylpyrrolidine, piperazine; polyether-diamines are employed as amino-functional substances.

**6.** Process according to Claim 1 or 2, wherein step (ii) is carried out in less than 12 h after step (i).

**7.** Process according to Claim 1 or 2, wherein the content of cyclic carbonate in the mixture obtained from step (i) is determined, and in step (ii) the amino-functional substance is employed in a molar ratio of amino-functional substance to cyclic carbonate of from 1.5 : 1.0 to 0.5 : 1.0.

**8.** Process according to Claim 1 or 2, wherein the reaction according to step (ii) is carried out at temperatures of between 0 and 150 °C.

**9.** Polyol mixtures obtainable by a process according to Claim 1.

**10.** Polyurethane obtainable by a process according to Claim 2.

**11.** Use of the polyol mixtures according to Claim 1 as a raw material for the preparation of polyurethane.

**12.** Use of the polyol mixtures according to Claim 1 as a raw material for the preparation of isocyanate-functional prepolymers, as a raw material for the preparation of aqueous polyurethane dispersions or as a raw material for the preparation of lacquers, adhesives, sealants and plastics.

## Revendications

1. Procédé pour la production de mélanges de polyols contenant un polyéthercarbonatepolyol et un polyol contenant des groupes uréthane, **caractérisé en ce que**

   (i) dans une première étape on fixe par addition un ou plusieurs oxydes d'alkylène et du dioxyde de carbone, en présence d'au moins un catalyseur DMC, sur une ou plusieurs substances de départ à fonction H (« copolymérisation »), et
   (ii) dans une deuxième étape on ajoute au mélange brut obtenu dans l'étape (i) au moins une substance à fonction amino.

2. Procédé selon la revendication 1, dans lequel

   (iii) on met en réaction le mélange de polyols résultant de l'étape (ii) avec un diisocyanate et/ou un polyisocyanate.

3. Procédé selon la revendication 1 ou 2, dans lequel on utilise comme substances à fonction amino des amines primaires aliphatiques, cycloaliphatiques et/ou hétérocycliques.

4. Procédé selon la revendication 1 ou 2, dans lequel on utilise comme substances à fonction amino des monoamines primaires, des monoamines secondaires, des diamines comportant des groupes amino primaires et/ou secondaires et/ou des amines à fonction hydroxy comportant des groupes amino primaires ou secondaires.

5. Procédé selon la revendication 1 ou 2, dans lequel on utilise comme substances à fonction amino le 2-aminoéthanol, le 2-amino-1-propanol, le 1-amino-2-propanol, le 2-amino-1-butanol, le 4-amino-1-butanol, la 4-(2-hydroxyéthyl)-pipéridine, la 4-(2-hydroxyéthyl)-pipérazine, le 2-amino-cyclohexanol, le 4-amino-cyclohexanol, le 2-aminocyclopentanol, la diéthanolamine, la bis-(2-hydroxypropyl)-amine et/ou des diamines comportant des groupes amino primaires et/ou secondaires (comme par exemple le 1,2-diaminoéthane, le 1,3-diaminopropane, le 1,4-diaminobutane, le 1,2-bis-(méthylamino)-éthane, le 1,3-diaminopentane, le 1,6-diaminohexane, le 1,8-diamino-octane, le 1,9-diaminononane, le 1,10-diaminodécane, le 1,12-diaminododécane, le 1,2-diaminocyclohexane, le 4,4'-diaminodicyclohexylméthane, l'isophoronediamine, la pipérazine, la 3-aminopyrrolidine, la 2-(aminométhyl)-pipéridine, la 4-(aminométhyl)-pipéridine, la 3-amino-pipéridine, la 4-aminopipéridine, la 2-aminométhylpipéridine, la 4-aminométhylpipéridine, la 2-aminométhylpyrrolidine, la pipérazine ; des polyétherdiamines.

6. Procédé selon la revendication 1 ou 2, dans lequel l'étape (ii) est effectuée en moins de 12 h à la suite de l'étape (i).

7. Procédé selon la revendication 1 ou 2, dans lequel on détermine la teneur en carbonate cyclique du mélange obtenu dans l'étape (i), et on utilise dans l'étape (ii) la substance à fonction amino en un rapport molaire de substance à fonction amino à carbonate cyclique de 1,5 : 1,0 à 0,5 : 1,0.

8. Procédé selon la revendication 1 ou 2, dans lequel la réaction selon l'étape (ii) s'effectue à des températures comprises entre 0 et 150 °C.

9. Mélanges de polyols pouvant être obtenus conformément à un procédé selon la revendication 1.

10. Polyuréthane pouvant être obtenu conformément à un procédé selon la revendication 2.

11. Utilisation des mélanges de polyols selon la revendication 1 en tant que matière première pour la production de polyuréthane.

12. Utilisation des mélanges de polyols selon la revendication 1 en tant que matière première pour la production de prépolymères à fonction isocyanate, en tant que matière première pour la production de dispersions aqueuses de polyuréthane ou en tant que matière première pour la production de peintures, d'adhésifs, de matières d'étanchéité et de matières plastiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004087788 A1
- WO 2006103212 A1
- WO 2004087788 A
- WO 2006103212 A
- WO 2008013731 A
- US 4826953 A
- WO 2008092767 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- DE OS2832253 A
- WO 0180994 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Polyurethane. Kunststoffhandbuch. vol. 7